# EUROPEAN PATENT SPECIFICATION

(11) **EP 0 842 812 B1**
(45) Date of publication and mention of the grant of the patent: **08.12.2004**
(21) Application number: 97203452.4
(22) Date of filing: 06.11.1997
(51) Int. Cl.: B60N 2/30, B60N 2/38

(54) **Dual pivoting buddy seat with sliding utility tray**
Doppelgelenkzusatzsitz mit Gleitnutztablett
Siège auxiliaire à double pivot à tablette coulissante utilitaire.

(30) Priority: 12.11.1996 US 30498 P; 21.03.1997 US 823281
(43) Date of publication of application: 20.05.1998
(73) Proprietor: CNH Belgium N.V., 8210 Zedelgem (BE)
(72) Inventor: Benedict, Tyler R., Ephrata, PA 17522 (US); Stauffer, David B., New Holland, PA 17557 (US)
(74) Representative: Vandenbroucke, Alberic

(56) References cited:
- EP-A- 0 110 011
- EP-A- 0 492 281
- EP-A- 0 633 160
- FR-A- 1 356 097
- US-A- 3 512 827
- US-A- 3 580 630

## Description

This invention relates to the improvement of the buddy seat in the cab of an agricultural combine harvester. More specifically it relates to a dual pivoting buddy seat with a sliding utility tray.

Mechanical harvesting of grain has taken place for decades. However, efforts continue in the attempt to make harvesting operations more efficient and effective. A combine harvester generally includes a header which cuts the crop. The header then moves the cut crop into a feeder house. The feeder house lifts the cut crop into the threshing and separation areas of the combine. The grain is separated from the stalk by a rotor. The grain is then moved and stored in a grain tank. The chaff and trash are deposited from the rear of the combine. An operator usually runs these various operations from a glass-enclosed cab. Typically, a cab is located behind the header and in front of the threshing and separation areas of the combine. An operator can observe most of the combine activities from the cab. During harvesting periods it is not uncommon for the combine to be operated for an extended time. Sometimes a single operator will use a combine for 16 to 18 hours a day. Furthermore, several operators may alternate in the use of the combine. Therefore is it necessary to provide a cab which will allow maximum operator comfort and flexibility. This will permit the operator to remain mentally alert for the long time intervals needed to harvest crops.

One aspect of maintaining the operator's alertness is to provide a second seat or buddy seat in the cab. The design of the buddy seat should be such as to minimize the space required. Also, a flat utility area which could be provided, might also help keep the driver alert by allowing the placement and storage of various items. For instance, a beverage holder or lunch box holder are examples of items which an operator might wish to save. Furthermore, with the advent of precision farming and various computerized systems, it would be advantageous to have an area where a lap-top computer or similar equipment could be placed and easily observed during farming operations.

The effort to design and manufacture a buddy seat and storage area which is proximal to an operator of a farm vehicle is considerable. The research effort has followed several paths. Most devices have been designed to move the operator's chair or buddy seat to allow for maximum comfort during farming operations. Typically, in the conventional cab, the seat back of the buddy seat is fixed to the cab's rear wall. The seat base is pivotally affixed to the rear wall of the cab and is lifted up or pushed down when not in use. To ensure that the driver's view is not blocked, the buddy seat is located behind and towards the left side of the operator. While this does not impact the operator's view, it is difficult for the operator to utilize the buddy seat as storage or utility area. In a conventional cab, the operator would have to reach back to get any items. Furthermore, the operator utilizing a lap-top computer or monitoring device would not be able to easily view the device.

The prior art illustrates these and additional difficulties. US-A-3,583,518 discloses an operator's station for a self-propelled agricultural machine. The operator's chair is capable of sliding rearward to allow for the operator to stand while driving the combine.

US-A-4,364,602 discloses a seat support structure for the driving of an earth moving machine. The entire seat structure slides rearward and then up the rear of the driving station. This chair is complex to move and does not allow the operator to easily move the chair during vehicle operations.

US-A-4,915,438 discloses a vehicular seating apparatus. An assistant driver's seat is moved to the side and allows the driver to go to the rear of the vehicle during operations. The assistant's seat moves towards the driver's seat to create the space. No storage space is developed as a result of the movement. The movement mechanism consists of several complex tracks on which the entire chair slides. This mechanism is complex and subject to becoming jammed if an object is dropped on track.

US-A-5,029,929 discloses a bed arrangement in the coupe area of a vehicle. In this disclosure, the seat back of the operator's chair comprises a pivoted upper and lower portions. The upper portion of the seat back is positioned so as to be part of a bed. The remaining portion of the bed is pivotally affixed to the rear wall of the cab. The main drawback to this design is the inability of the operator to utilize the bed or any storage space during the operation of the vehicle.

FR-A-1 356 097 relates to a pivotable seat for a car. The flat seat back can be pivoted downwardly and forwardly onto the seat base. Thereafter the combined back and base of the seat can be pivoted forwardly about an axis at the front of the base for providing access to the interior of a box below the driver's seat. The box may contain part of the engine or may be used as a storage area for tools. The back of the seat is not suitable for holding any material during driving, as its flat surface cannot retain objects from sliding over the edges. Moreover, its rearward location makes it unsuitable for a monitoring device, which should be viewed frequently by the operator.

EP-A-0 633 160 discloses a passenger seat arrangement for a car. The seat base can be pivoted upwardly and rearwardly for providing access to a storage area below the chair. The seat back can be pivoted forwardly and downwardly about the same axis for providing access to a tray, which is built into the seat back. The tray is too far back to the rear for providing a proper place for a monitor or a computer, which should be viewed during driving.

Consequently, the need exists for a buddy seat which is positioned in a cab of a combine harvester, such that the operator has an unobstructed view of farming operations, but can easily be used as a storage or utility area. The utility area on the one hand should be located proximal to the operator's chair and on the other hand should use a minimum amount of space in a combine cab.

According to the invention, there is provided a dual pivoting buddy seat for installation in a vehicle adjacent an operator's chair mounted on a floor, said buddy seat comprising:
a storage area fit for fixation to said floor;
a seat base pivotally affixed to said storage area; and
a seat back pivotally affixed to said seat base;
said buddy seat being characterized in that:
said seat back is provided with a utility tray; and
said seat back and said utility tray are slideably affixed to a slide rail assembly, which is pivotally affixed to the seat base, whereby the seat base may be rotated to view the storage area, the seat back may be rotated to allow access to the utility tray and the utility tray may be slideably moved relative to the seat base.

Advantageously, the utility tray has a utility area and beverage holder which may be pivoted and/or moved to an extended positioned proximal to an operator seated in the operator's chair for easy access to the utility tray.

The slide rail assembly may be placed on a moulded rail guide on the utility tray and a sliding strip on the seat back. The friction between the utility tray, seat back and slide rail assembly may be controlled by adjustment screws with spacers. By loosening or tightening the adjustment screws, the friction between the slide rail assembly and utility tray or seat back is controlled.

The dual pivoting buddy seat with sliding utility tray may pivot so as to provide easy access to the storage area.

Advantageously, the slide rail assembly may have an electroplated coating, preferably black, so as to minimize friction. The seat back may comprise a sliding strip in contact with the slide rail assembly so as to minimize friction.

A stop pin, oriented towards the centre of the seat back and contacting a moulded stop on the rail guide, may be used to limit the length of slide of the slide rail assembly, thereby preventing the utility tray and seat back from becoming separated from the slide rail assembly.

The utility tray may slide along said slide rail assembly creating a rectangular opening large enough to accommodate a conventional lunch box.

Preferably, the utility area is large enough to accommodate a lap-top computer or monitor.

The buddy seat may have colour and styling matched contoured seat cushions on the seat base and seat back.

A buddy seat in accordance with the present invention will now be described in further detail, by way of example, with reference to the following drawings, in which:

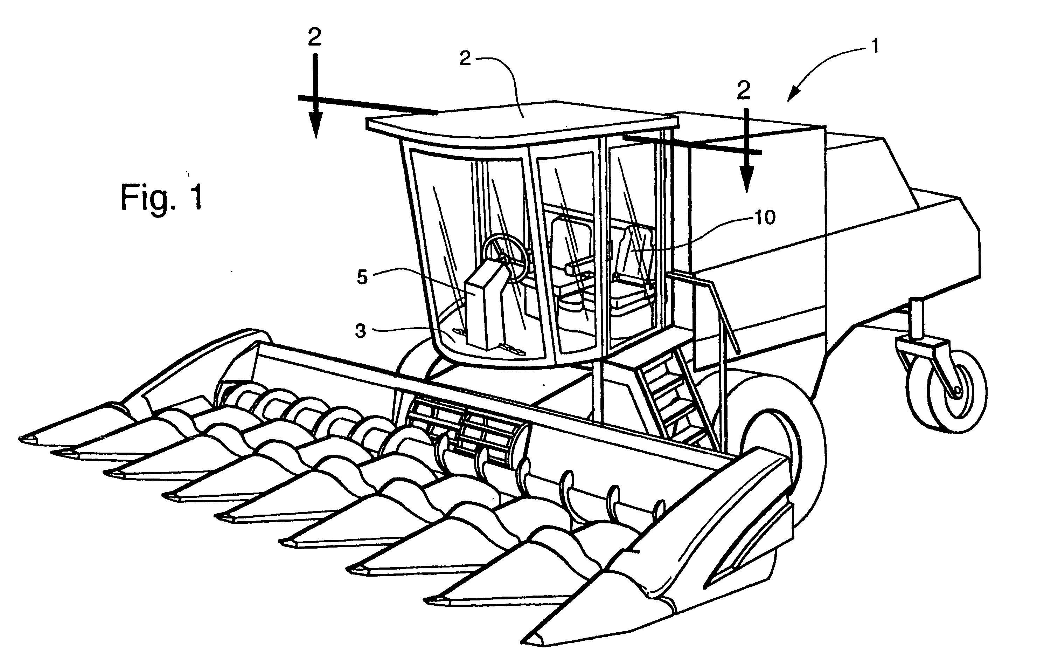

Figure 1 is a general view of a combine harvester combine with a cab containing a buddy seat in accordance with the present invention;

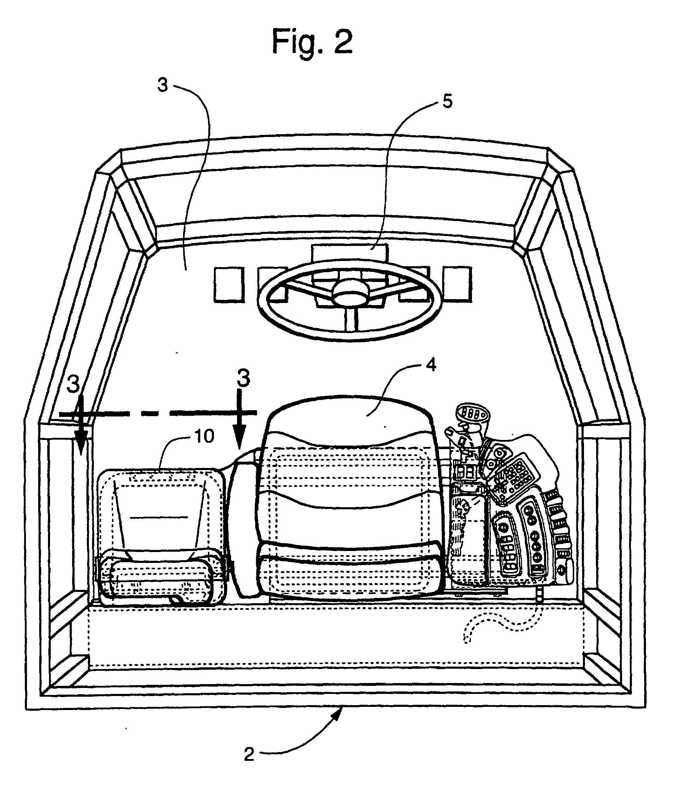

Figure 2 is a plan view of the cab as seen from the line 2-2 of Figure 1;
Figure 3 is a front elevation view of the present invention as seen from line 3-3 of Figure 2;
Figure 4 is a side elevational view of the seat of Figure 3;
Figure 5 is a view similar to Figure 4, but with the seat back folded down to expose the tray;
Figure 6 is a view similar to Figure 5, but with the seat base rotated forward to give access to the storage access view;

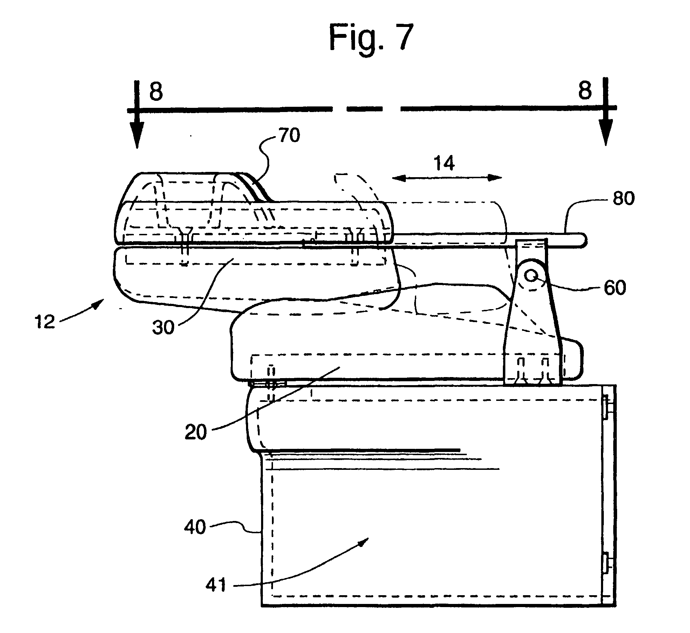

Figure 7 is a view like Figure 5, but with the seat back and utility tray extended proximal to the operator's chair;
Figure 8 is a plan view of the structure of Figure 7 to a larger scale as seen from the line 8-8 of Figure 7 showing the rectangular 'lunch box' opening; and
Figure 9 is an enlarged sectional view through the tray and seat back taken on the line 9-9 of Figure 8.

Referring to the drawings, it is possible to observe the major elements and general operation of the present invention. Left and right references are used as a matter of convenience and are determined by standing at the rear of the combine and facing the forward end in the normal direction of travel. Likewise, forward and rearward are determined with reference to the normal direction of travel of the combine. Upward or downward orientations are relative to the ground or operating surface. Horizontal or vertical planes are also relative to ground.

An embodiment of the invention is shown within the cab 2 of a combine 1. A typical combine harvester has a header for cutting a crop. As the combine 1 and header are moved forward, the grain and stalk are cut by the header. The header moves the cut crop material into an auger trough. A transverse auger pushes the grain and stalk in the auger trough to the centre of the header. Located at the centre of the header is the feeder house or elevator. The feeder house moves the grain and stalks rearward into the threshing and separation systems of the combine 1. After processing and separation, the processed grain is stored in a grain tank located near the top of the combine 1. The trash or chaff is ejected from the rear of the combine. The operator runs the combine 1 from the cab 2 located behind the header and at the front of the combine 1. From the cab 2 the operator can observe most of the various combine functions. The cab usually has a large glass window or several windows which afford the operator the maximum ability to monitor the header. Located in the centre of the cab 2 is the steering column 5. Behind the steering column 5 is an operator's chair 4.

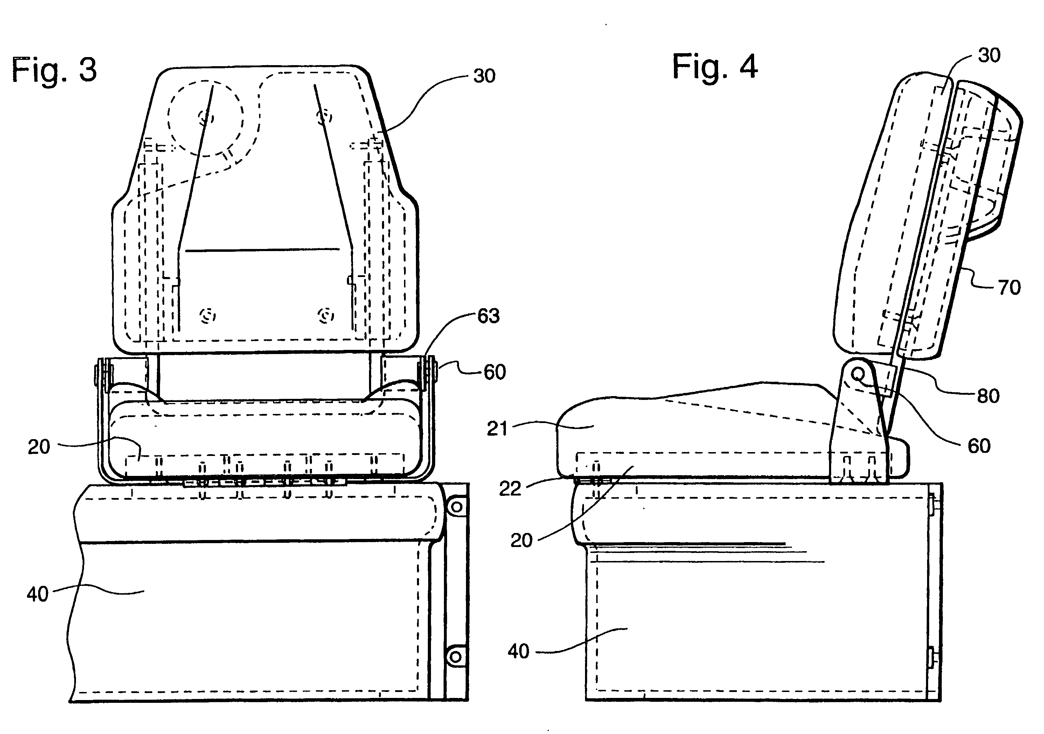

A buddy seat 10 according to the present invention is located within the cab 2 of the combine 1 and consists of several elements. A general review of the major elements will be followed by a more detailed description later. The second seat or buddy seat 10 is located next to the operator's chair 4 in the cab 2 of the combine 1 and has a seat base 20 pivotally attached to a storage area 40 by a seat base pivot hinge 50. A slide rail assembly 80 (Figure 4) is pivotally attached to the seat base 20 by a seat back pivot hinge 60. The slide rail assembly 80 is inserted between a seat back 30 and a utility tray 70.

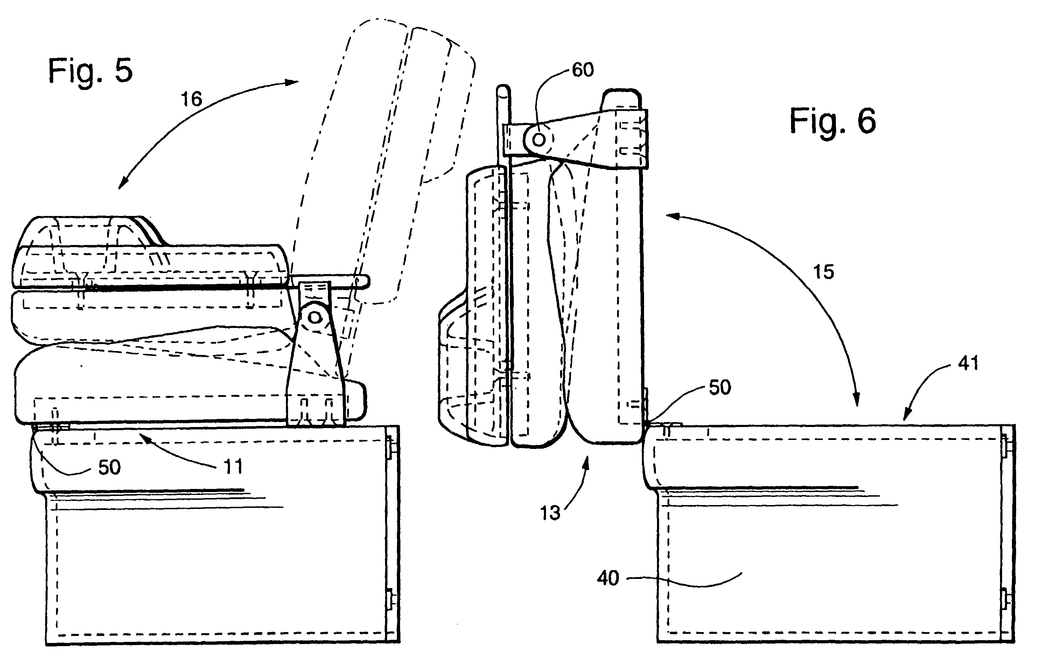

The storage area 40 is located on the interior cab floor 3. The storage area 40 is located by the operator's chair 4 and supports the remaining elements of the buddy seat 10. In the preferred embodiment, the storage area 40 is roughly square-shaped with some contouring. The contouring prevents the accumulation of dust and dirt in various corners. The contouring also provides for modern styling, easier entry and egress and more leg room. Also in the preferred embodiment, a portion of the storage area is affixed to the supports of the operator's chair 4. The storage area 40 may be affixed to a portion of the rear cab wall. An opening in the storage area creates the storage access aperture 41 (Figure 6). The storage access aperture 41 enables the operator to gain access to the interior of the storage area 40. Various maintenance items may be accessed in this manner. Specifically, elements of the electrical or air conditioning system may be serviced. It is also possible to store various items such as an ice chest, manuals or machine maintenance tools and supplies.

The seat base 20 is attached to the storage area 40 by the seat base pivot hinge 50. The seat base 20 covers the storage access aperture 41 when lowered. The seat base pivot hinge 50 is attached at a forward location 22 of the seat base 20. This location allows the seat base 20 to rotate (arrow 15 in Figure 6) about the seat base hinge 50 to a vertical position 13. The seat base 20 also has a seat base contoured cushion 21.

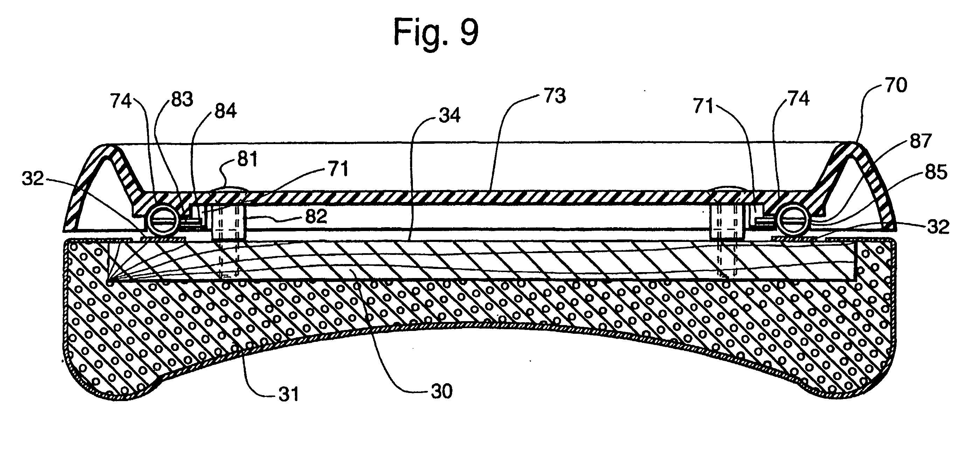

The slide rail assembly 80 has a tubular cross-section 85 (Figure 9) and is generally 'C'-shaped. Located at the ends of the slide rail assembly 80 are a pair of identical stop pins 83. Each stop pin 83 is attached to the assembly 80 and has a stop pin tip 84. An electroplated black coating 87 may be placed on the assembly 80 to reduce friction of the utility tray 70 and seat back 30.

The slide rail assembly 80 is attached to the seat base 20 by the seat back pivot hinge 60. The seat back pivot hinge 60 is attached at a lower location 33 of the slide rail assembly 80. The seat back pivot hinge 60 has an elongated hinge support 61. The hinge 60 rotates about a pair of identical bolts 62 and friction washers 63. The friction washer 63 helps to provide a more controlled rotation about the hinge 60. The seat back pivot hinge 60 at the lower location 33 on the slide rail assembly 80 provides an axis which allows the seat back 30 to be moved (arrow 16 in Figure 5) from the vertical position 10 to the horizontal position 11.

The slide rail assembly 80 is inserted between the seat back 30 and utility tray 70 (Figure 9). The seat back 30 also has a contoured cushion 31. Also located on the seat back 30 are a pair of identical slide strips 32. The slide strips are rectangular pieces of plastic or similarly smooth material. The slide strips 31 are oriented lengthwise from the top to the bottom of the seat back 30. The slide rail assembly 80 contacts the slide strips 32. It should also be noted that the stop pin tips 84 are oriented towards the seat back centre 34.

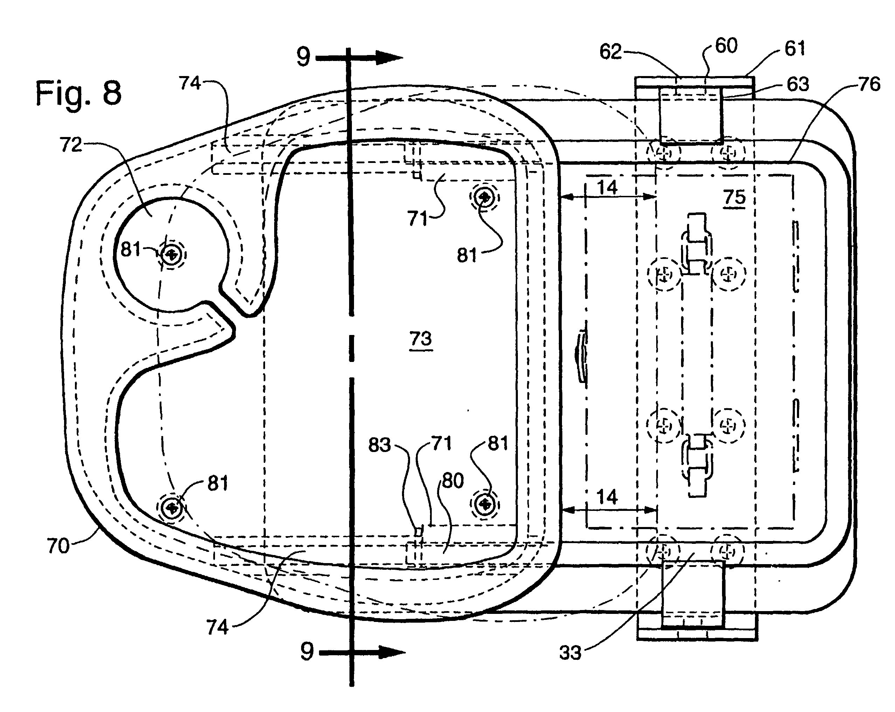

The utility tray 70 is attached to the seat back 30 by four adjustment screws 81 (Figure 8). On the top surface of the utility tray 70 there is a moulded beverage holder 72 and a utility area 73. On the underside of the utility tray 70 there is a semi-circular, moulded rail guide 74. There are two identical, mirror image guides 74, generally parallel and oriented towards the front and rear of the utility tray 70 (when the tray is in the horizontal position). The slide rail assembly 80 is inserted into rail guides 74, so that the utility tray 70 is capable of sliding relative to the rail assembly 80. Affixed to the rail guide 74 is a moulded stop 71. The moulded stop 71 is located on the side of the rail guide 74 closest to the centre of the utility tray 70. Each adjustment screw 81 has a spacer 82. The spacer 82 can be embedded into the utility tray 70. When the adjustment screw is tightened, the spacer 82 ensures that the utility tray 70 still has sufficient friction between the seat back 30, utility tray 70 and the slide rail assembly 80, yet still permitting movement of the seat back 30 and utility tray 70.

During normal operations, the seat back 30 of the buddy seat 10 is in the vertical position as shown in Figures 3 and 4. This enables a second individual to be seated by the operator. The seat back 30 can be rotated about the seat back pivot hinge 60 into the horizontal position 11 (Figure 5). The operator can then slide (arrow 14) the utility tray 70 and the seat back 30 forward to position 12 relative to the seat base 20. The utility area 73 is then positioned near the operator. This allows the operator to place items onto the utility area 73, such as a lap-top computer or monitor. When the utility tray 70 and seat back 30 are moved forward, a rectangular opening 75 is created. The length 76 of the rectangular opening is 215 millimetres. This opening 75 is sufficiently large to accommodate a conventional lunch box (shown in phantom line). If the operator needs to access the storage area, the seat base 30 may be tilted (arrow 15) to allow access to the storage area 40 through the storage access aperture 41. To adjust the sliding motion of the seat back 30 and utility tray 70 relative to the slide rail assembly 80, the adjustment screws 81 may tightened or loosened. The slide rail assembly 80 is inserted between the rail guide 74 on the utility tray 70 and the slide strip 32. The stop pin 83 contacting the moulded stop 71 prevents the slide rail assembly 80 from separating from the utility tray 70 and seat back 30.

It will be obvious to those skilled in the art that various changes may be made without departing from the scope of the invention as defined by the claims and the invention is not to be considered limited to what is illustrated in the drawings and described in the specification. E.g. the buddy seat arrangement may also be used in other agricultural or utility vehicles.

## Claims

1. A dual pivoting buddy seat (10) for installation in a vehicle (1) adjacent an operator's chair (4) mounted on a floor (3), said buddy seat (10) comprising:
a storage area (40) for fixation to said floor (3);
a seat base (20) pivotally affixed to said storage area (40);
a seat back (30) pivotally affixed to said seat base (20);
**characterized in that**:
said seat back (30) is provided with a utility tray (70); and
said seat back (30) and said utility tray (70) are slideably affixed to a slide rail assembly (80), which is pivotally affixed to the seat base (20), whereby the seat base (20) may be rotated to view the storage area (40), the seat back (30) may be rotated to allow access to the utility tray (70) and the utility tray (70) may be slideably moved relative to the seat base (20).

2. A dual pivoting buddy seat according to claim 1, **characterized in that** the utility tray (70) is slideable relative to the seat base (20) to an extended horizontal position (12), proximal to an operator seated in the operator's chair (4).

3. A dual pivoting buddy seat according to claim 1 or 2, **characterized in that**:
said seat base (20) is pivotally affixed to the storage area (40) by a seat base pivot hinge (50), which is located at a forward location (22) on the seat base (20);
said slide rail assembly (80) is pivotally affixed to the seat base (20) by a seat back pivot hinge (60), which is located at a lower location (33) on the slide rail assembly (80); and
said utility tray (70) is affixed to the seat back (30) with the slide rail assembly (80) slideably inserted between said utility tray (70) and said seat back (30).

4. A dual pivoting buddy seat according to claim 3, **characterized in that** the seat back hinge (60) further comprises an elongated hinge support (61).

5. A dual pivoting buddy seat according to claim 3 or 4, **characterized in that** the seat back hinge (60) comprises a bolt (62) and a friction washer (63) for controlling rotation between the slide rail assembly (80) and the seat base (20).

6. A dual pivoting buddy seat according to any of the preceding claims, **characterized in that** the utility tray (70) comprises at least one semi-circular, moulded rail guide (74) for slideably receiving the slide rail assembly (80).

7. A dual pivoting buddy seat according to claim 6, **characterized in that** the moulded rail guide (74) further comprises a moulded stop (71) and the slide rail assembly (80) comprises a stop pin (83), whereby the stop pin (83) contacts the moulded stop (71) to limit slideable motion (14) between the utility tray (70) and the seat base (20).

8. A dual pivoting buddy seat according to claim 7, **characterized in that** the tip (84) of the stop pin (83) is oriented towards a centre (34) of the seat back (30).

9. A dual pivoting buddy seat according to any of the preceding claims, **characterized in that** the slide rail assembly (80) has an electroplated black coating (87) for reducing friction between the slide rail assembly (80) and the utility tray (70) and between the slide rail assembly (80) and the seat back (30).

10. A dual pivoting buddy seat according to any of the preceding claims, **characterized in that** the seat back (30) comprises a slide strip (32), contacting the slide rail assembly (80), whereby the slide strip (32) reduces friction between the slide rail assembly (80) and the seat back (30).

11. A dual pivoting buddy seat according to any of the preceding claims, **characterized in that** the seat back (30) further comprises a plurality of adjustment screws (81), each screw having a spacer (82), whereby the adjustment of each said screw (81) controls the sliding of the utility tray (70) relative to the seat base (20).

12. A dual pivoting buddy seat according to claim 11, **characterized in that** the utility tray (70) is affixed to the seat back (30) by said plurality of adjustment screws (81).

13. A dual pivoting buddy seat according to any of the preceding claims, **characterized in that** the storage area (40) has a storage access aperture (41), which is located beneath the seat base (20).

14. A dual pivoting buddy seat according to any of the preceding claims, **characterized in that** the utility tray (70) slides along said slide rail assembly (80) creating a rectangular opening (75) between the utility tray (70) and the slide rail assembly (80).

15. A dual pivoting buddy seat according to claim 14, **characterized in that** said rectangular opening (75) has a length of 215 millimetres.

16. A dual pivoting buddy seat according to any of the preceding claims, **characterized in that** the seat back (30) further comprises a seat back contoured cushion (31) and the seat base (20) further comprises a seat base contoured cushion (21).

17. A dual pivoting buddy seat according to any of the preceding claims, **characterized in that** the utility tray (70) comprises a moulded beverage holder (72) and a utility area (73).

18. A dual pivoting buddy seat according to any of the preceding claims, **characterized in that** said slide rail assembly (80) is tubular and 'C'-shaped.

## Patentansprüche

1. Doppelt klappbarer Zusatzsitz (10) für einen Einbau in ein Fahrzeug (1) benachbart zu einem Fahrersitz (4), der auf einem Boden (3) befestigt ist, wobei der Zusatzsitz (10) Folgendes umfasst:
eine Aufbewahrungsbereich (40) zur Befestigung an dem Boden (3);
einen Sitz-Basisteil (20), der schwenkbar an den Aufbewahrungsbereich (40) befestigt ist;
eine Sitz-Rückenlehne (30), die schwenkbar an dem Sitz-Basisteil (20) befestigt ist;
**dadurch gekennzeichnet, dass**:
die Sitz-Rückenlehne (30) mit einer Schale (70) für Gebrauchsgegenstände versehen ist; und
die Sitz-Rückenlehne (30) und die Schale (70) für Gebrauchsgegenstände gleitend an einer Gleitschienenbaugruppe (80) befestigt sind, die schwenkbar an dem Sitz-Basisteil (20) befestigt ist, wodurch der Sitz-Basisteil (20) gedreht werden kann, um den Aufbewahrungsbereich (40) zu sehen, die Sitz-Rückenlehne (30) gedreht werden kann, um einen Zugang an die Schale (70) für Gebrauchsgegenstände zu erhalten, und die Schale (70) für Gebrauchsgegenstände gleitend gegenüber dem Sitz-Basisteil (20) bewegt werden kann.

2. Doppelt klappbarer Zusatzsitz nach Anspruch 1, **dadurch gekennzeichnet, dass** die Schale (70) für Gebrauchsgegenstände gegenüber dem Sitz-Basisteil (20) auf eine ausgefahrene horizontale Position (12) in der Nähe eines Fahrers verschiebbar ist, der auf dem Fahrersitz (4) sitzt.

3. Doppelt klappbarer Zusatzsitz gemäß Anspruch 1 oder 2, **dadurch gekennzeichnet, dass**:
der Sitz-Basisteil (20) an dem Aufbewahrungsbereich (40) über ein Sitz-Basisteil-Schwenkgelenk (50) befestigt ist, das sich an einer vorderen Position (22) auf dem Sitz-Basisteil (20) befindet;
die Gleitschienenbaugruppe (80) schwenkbar an dem Sitz-Basisteil (20) durch ein Sitz-Rückenlehnen-Schwenkgelenk (40) befestigt ist, das sich an einer unteren Position (33) auf der Gleitschienenbaugruppe (80) befindet; und
die Schale (70) für Gebrauchsgegenstände an der Sitz-Rückenlehne (30) angebracht ist, wobei die Gleitschienenbaugruppe (80) gleitend verschiebbar zwischen der Schale (70) für Gebrauchsgegenstände und der Sitz-Rückenlehne (30) eingefügt ist.

4. Doppelt klappbarer Zusatzsitz nach Anspruch 3, **dadurch gekennzeichnet, dass** das Sitz-Rückenlehnen-Schwenkgelenk (50) weiterhin eine langgestreckte Gelenkhalterung (61) umfasst.

5. Doppelt klappbarer Zusatzsitz nach Anspruch 3 oder 4, **dadurch gekennzeichnet, dass** das Sitz-Rückenlehnen-Schwenkgelenk (60) eine Schraube (62) und eine Reib-Beilagscheibe (63) zur Steuerung der Drehung zwischen der Gleitschienenbaugruppe (80) und dem Sitz-Basisteil (20) umfasst.

6. Doppelt klappbarer Zusatzsitz nach einem der vorhergehenden Ansprüche, **dadurch gekennzeichnet, dass** die Schale (70) für Gebrauchsgegenstände zumindest eine halbkreisförmige geformte Schienenführung (74) zur gleitenden Aufnahme der Gleitschienenbaugruppe (80) umfasst.

7. Doppelt klappbarer Zusatzsitz nach Anspruch 6, **dadurch gekennzeichnet, dass** die geformte Schienenführung (74) weiterhin einen geformten Anschlag (71) umfasst und dass die Gleitschienenbaugruppe (80) einen Anschlagstift (83) umfasst, wobei der Anschlagstift (83) mit dem geformten Anschlag (71) in Kontakt kommt, um die Gleitbewegung (14) zwischen der Schale (70) für Gebrauchsgegenstände und dem Sitz-Basisteil (20) zu begrenzen.

8. Doppelt klappbarer Zusatzsitz nach Anspruch 7, **dadurch gekennzeichnet, dass** die Spitze (84) des Anschlagstiftes (83) in Richtung auf die Mitte (84) der Sitz-Rückenlehne (30) gerichtet ist.

9. Doppelt klappbarer Zusatzsitz nach einem der vorhergehenden Ansprüche, **dadurch gekennzeichnet, dass** die Gleitschienenbaugruppe (80) eine galvanisierte schwarze Beschichtung (87) zur Verringerung der Reibung zwischen der Gleitschienenbaugruppe (80) und der Schale (70) für Gebrauchsgegenstände und zwischen der Gleitschienenbaugruppe (80) und der Sitz-Rückenlehne (30) aufweist.

10. Doppelt klappbarer Zusatzsitz nach einem der vorhergehenden Ansprüche, **dadurch gekennzeichnet, dass** die Sitz-Rückenlehne (30) einen Gleitstreifen (32) umfasst, der mit der Gleitschienenbaugruppe (80) in Kontakt kommt, wobei der Gleitstreifen (32) die Reibung zwischen der Gleitschienenbaugruppe (80) und der Sitz-Rückenlehne (30) verringert.

11. Doppelt klappbarer Zusatzsitz nach einem der vorhergehenden Ansprüche, **dadurch gekennzeichnet, dass** die Sitz-Rückenlehne (30) weiterhin eine Anzahl von Einstellschrauben (81) umfasst, wobei jede Schraube ein Abstandsstück (82) aufweist, wodurch die Einstellung jeder Schraube (81) das Gleiten der Schale (70) für Gebrauchsgegenstände gegenüber dem Sitz-Basisteil (20) kontrolliert.

12. Doppelt klappbarer Zusatzsitz nach Anspruch 11, **dadurch gekennzeichnet, dass** die Schale (70) für Gebrauchsgegenstände an der Sitz-Rückenlehne (30) durch die Anzahl von Einstellschrauben (81) befestigt ist.

13. Doppelt klappbarer Zusatzsitz nach einem der vorhergehenden Ansprüche, **dadurch gekennzeichnet, dass** der Aufbewahrungsbereich (40) eine Aufbewahrungsbereich-Zugangsöffnung (41) aufweist, die sich unterhalb des Sitz-Basisteils (20) befindet.

14. Doppelt klappbarer Zusatzsitz nach einem der vorhergehenden Ansprüche, **dadurch gekennzeichnet, dass** die Schale (70) für Gebrauchsgegenstände entlang der Führungsschienenbaugruppe (80) gleitet, wodurch eine rechtwinklige Öffnung (75) zwischen der Schale (70) für Gebrauchsgegenstände und der Gleitschienenbaugruppe (80) geschaffen wird.

15. Doppelt klappbarer Zusatzsitz nach Anspruch 14, **dadurch gekennzeichnet, dass** die rechtwinklige Öffnung (75) eine Länge von 215 mm aufweist.

16. Doppelt klappbarer Zusatzsitz nach einem der vorhergehenden Ansprüche, **dadurch gekennzeichnet, dass** die Sitz-Rückenlehne (30) weiterhin ein konturiertes Sitz-Rückenlehnen-Kissen (31) umfasst, und dass der Sitz-Basisteil (20) weiterhin ein konturiertes Sitz-Basisteil-Kissen (21) umfasst.

17. Doppelt klappbarer Zusatzsitz nach einem der vorhergehenden Ansprüche, **dadurch gekennzeichnet, dass** die Schale (70) für Gebrauchsgegenstände einen geformten Getränkehalter (72) und einen Nutzbereich (73) umfasst.

18. Doppelt klappbarer Zusatzsitz nach einem der vorhergehenden Ansprüche, **dadurch gekennzeichnet, dass** die Gleitschienenbaugruppe (80) rohrförmig und "C"-förmig ist.

## Revendications

1. Strapontin (10) à double pivotement destiné à être installé dans un véhicule (1 ), à proximité d'un siège d'opérateur (4) monté sur un plancher (3), ledit strapontin (10) comprenant:
une zone de stockage (40) adaptée pour être fixée audit plancher (3);
une assise de siège (20) fixée avec pivotement à ladite zone de stockage (40); et
un dossier de siège (30) fixé avec pivotement à ladite assise de siège (20);
ledit strapontin étant **caractérisé en ce que**:
ledit dossier de siège (30) est équipé d'un plateau utilitaire (70); et
ledit dossier de siège (30) et ledit plateau utilitaire (70) sont fixés avec coulissement à un assemblage de glissières (80), qui est fixé avec pivotement à l'assise de siège (20), de telle sorte que l'assise de siège (20) peut être pivotée pour visualiser la zone de stockage (40), que le dossier de siège (30) peut être pivoté pour permettre l'accès au plateau utilitaire (70) et que le plateau utilitaire (70) peut être déplacé avec coulissement par rapport à l'assise de siège (20).

2. Strapontin à double pivotement selon la revendication 1, **caractérisé en ce que** le plateau utilitaire (70) peut coulisser par rapport à l'assise de siège (20) vers une position horizontale en extension (12), à proximité d'un opérateur assis dans le siège d'opérateur (4).

3. Strapontin à double pivotement selon la revendication 1 ou 2, **caractérisé en ce que**:
ladite assise de siège (20) est fixée avec pivotement à la zone de stockage (40) par une charnière d'assise de siège (50), située dans une position avant (22) de l'assise de siège (20);
ledit assemblage de glissières (80) est fixé avec pivotement à l'assise de siège (20) par une charnière de dossier de siège (60), située dans une position inférieure (33) sur l'assemblage de glissières (80); et
ledit plateau utilitaire (70) est fixé au dossier de siège (30) avec l'assemblage de glissières (80) inséré avec coulissement entre ledit plateau utilitaire (70) et ledit dossier de siège (30).

4. Strapontin à double pivotement selon la revendication 3, **caractérisé en ce que** la charnière de dossier de siège (60) comporte en outre un support allongé de charnière (61).

5. Strapontin à double pivotement selon la revendication 3 ou 4, **caractérisé en ce que** la charnière de dossier de siège (60) comporte un boulon (62) et une rondelle de friction (63) pour contrôler la rotation entre l'assemblage de glissières (80) et l'assise de siège (20).

6. Strapontin à double pivotement selon l'une quelconque des revendications précédentes, **caractérisé en ce que** le plateau utilitaire (70) comporte au moins un guidage moulé semi-circulaire (74) destiné à accueillir l'assemblage de glissières (80) avec coulissement.

7. Strapontin à double pivotement selon la revendication 6, **caractérisé en ce que** le guidage moulé (74) comporte en outre un arrêt moulé (71 ) et que l'assemblage de glissières (80) comporte une broche d'arrêt (83), de telle sorte que la broche d'arrêt (83) entre en contact avec l'arrêt moulé (71 ) pour limiter le coulissement (14) entre le plateau utilitaire (70) et l'assise de siège (20).

8. Strapontin à double pivotement selon la revendication 7, **caractérisé en ce que** la pointe (84) de la broche d'arrêt (83) est orientée vers le centre (34) du dossier de siège (30).

9. Strapontin à double pivotement selon l'une quelconque des revendications précédentes, **caractérisé en ce que** l'assemblage de glissières (80) possède un revêtement galvanoplastique noir (87) pour réduire la friction entre l'assemblage de glissières (80) et le plateau utilitaire (70) et entre l'assemblage de glissières (80) et le dossier de siège (30).

10. Strapontin à double pivotement selon l'une quelconque des revendications précédentes, **caractérisé en ce que** le dossier de siège (30) comporte une bande de coulissement (32), entrant en contact avec l'assemblage de glissières (80), de telle sorte que la bande de coulissement (32) réduit la friction entre l'assemblage de glissières (80) et le dossier de siège (30).

11. Strapontin à double pivotement selon l'une quelconque des revendications précédentes, **caractérisé en ce que** le dossier de siège (30) comporte en outre une pluralité de vis de réglage (81 ), chaque vis possédant une entretoise (82), de telle sorte que l'ajustement de chaque dite vis (81 ) contrôle le coulissement du plateau utilitaire (70) par rapport à l'assise de siège (20).

12. Strapontin à double pivotement selon la revendication 11, **caractérisé en ce que** le plateau utilitaire (70) est fixé au dossier de siège (30) par ladite pluralité de vis de réglage (81 ).

13. Strapontin à double pivotement selon l'une quelconque des revendications précédentes, **caractérisé en ce que** la zone de stockage (40) dispose d'une ouverture d'accès au stockage (41), située sous l'assise de siège (20).

14. Strapontin à double pivotement selon l'une quelconque des revendications précédentes, **caractérisé en ce que** le plateau utilitaire (70) coulisse le long dudit assemblage de glissières (80) en créant une ouverture rectangulaire (75) entre le plateau utilitaire (70) et l'assemblage de glissières (80).

15. Strapontin à double pivotement selon la revendication 14, **caractérisé en ce que** ladite ouverture rectangulaire (75) a une longueur de 215 millimètres.

16. Strapontin à double pivotement selon l'une quelconque des revendications précédentes, **caractérisé en ce que** le dossier de siège (30) comporte en outre un coussin galbé de dossier (31 ) et que l'assise de siège (20) comporte en outre un coussin galbé d'assise (21).

17. Strapontin à double pivotement selon l'une quelconque des revendications précédentes, **caractérisé en ce que** le plateau utilitaire (70) comporte un support moulé de boisson (72) et une zone utilitaire (73).

18. Strapontin à double pivotement selon l'une quelconque des revendications précédentes, **caractérisé en ce que** ledit assemblage de glissières (80) est tubulaire et en forme de "C".
